(19)

Europäisches
Patentamt
European
Patent Office
Office européen
des brevets

(11)  **EP 3 872 754 A1**

(12)  # EUROPEAN PATENT APPLICATION

(43) Date of publication:
**01.09.2021  Bulletin 2021/35**

(51) Int Cl.:
***G06T 7/00*** *(2017.01)*  ***G06T 7/11*** *(2017.01)*
***G06T 11/00*** *(2006.01)*

(21) Application number: **20160012.9**

(22) Date of filing: **28.02.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Healthcare GmbH
91052 Erlangen (DE)**

(72) Inventors:
 • **CORREDOR JEREZ, Ricardo Alberto
  1018 Lausanne (CH)**
 • **PIREDDA, Gian Franco
  1024 Ecublens (CH)**
 • **KOBER, Tobias
  1007 Lausanne (CH)**

(74) Representative: **Maier, Daniel Oliver
  Siemens AG
  Postfach 22 16 34
  80506 München (DE)**

(54)  **METHOD AND SYSTEM FOR AUTOMATED PROCESSING OF IMAGES WHEN USING A CONTRAST AGENT IN MRI**

(57)  The present invention concerns a system and a method for automated biological tissue characterization of a biological object to be imaged using contrast agent enhanced MRI, the method comprising:
- acquiring (101) post-contrast MRI data for the biological object;
- applying (102) a function trained by a training system (205) to the received post-contrast MRI data in order to output a synthetic pre-contrast image from said post-contrast MRI data;
- automatically characterizing (103) biological tissues of said biological object from the synthetic pre-contrast image.

100

```
101
 ↓
102
 ↓
103
```

FIG 1

EP 3 872 754 A1

**Description**

The present disclosure is directed, in general, to imaging techniques for imaging biological objects, like tissues, using Magnetic Resonance Imaging (MRI) techniques. More specifically, the present invention is directed to methods and systems for automated processing of those images when using a contrast agent in MRI.

MRI is an established imaging technique able to deliver a wide variety of contrasts among soft tissues that contain information of crucial importance in daily clinical practice. According both to the body part and the disease under analysis, several international consortiums provide guidelines recommending the use of specific MRI protocols. For instance, the European research network for MR imaging in multiple sclerosis (MAGNIMS) recommends the acquisition of T2 FLAIR and gadolinium (Gd)-enhanced T1-weighted (T1w) images for the clinical diagnosis at baseline, whereas T1w images without administration of gadolinium (pre-Gd) are only presented as optional [1]. Even though the former acquisitions are within the most relevant for clinical diagnosis (Gd-enhanced T1w acquisitions are essential to assess the disruption of the blood-brain-barrier in active lesions), pre-Gd T1w images provide added value for the quantitative assessment of additional neuroimaging biomarkers (e.g. morphometry, automated localization and counting of brain lesions, among others). For instance, given the high tissue contrast between white matter (WM), grey matter (GM) and cerebrospinal fluid (CSF) offered by pre-contrast T1w, a variety of tools have been developed to automatically assess brain volumetry from T1w images [2] [3], including the Siemens Healthcare Brain Morphometry software [4] for syngo.via and AI-Rad Companion. Unfortunately, it has also been shown by previous studies that the application of such tools on post-Gd T1w images results in significant biases given the sensitivity of brain volumetric assessments to changes in image intensities [5], introducing for instance errors in tissue classification.

A potential solution with respect to this problematic of biases resulting from the application of tools tailored for pre-Gd T1w images to post-contrast images might be found in a paper of Ceccaldi et al. [6], wherein a deep learning network is trained to achieve brain tissue segmentation independently from the employed protocol.

Unfortunately, in the absence of the main contrast from which ground truth labels are derived, the tissue segmentation achieved with this existing solution might present the disadvantage of relying on suboptimal contrasts with poor information regarding tissues boundaries that might result in poor segmentation quality. In addition, the quality of the segmentation strongly depends on the ground truth labels used for the training and does not open to the possibility of using eventually other available tools for the tissue segmentation or perform any other processing that requires the missing contrast (e.g., lesion counting and localization).

It is therefore desirable to find a method and a system for improving an automated characterization process of biological tissues, like an automated segmentation of biological tissues, when using a contrast agent during MRI, so that errors are avoided (e.g. errors in tissue classification in the case of automated segmentation) and image quality is improved while keeping the total acquisition time as short as possible for realistic clinical application.

Said objective is achieved according to the present invention by a method and a system for automated processing of images according to the object of the independent claims. Dependent claims present further advantages of the invention.

The present invention proposes notably to generate pre-contrast images (e.g. pre-Gd images, i.e. images representing a biological object before or without an administration of a contrast agent) from post-contrast imaging data (e.g. from post-Gd images, i.e. images of the biological object taken after the administration of said contrast agent) based on machine learning, e.g. based on a deep learning network. The pre-contrast images synthetized from the deep learning network are then used for an automated process configured for characterizing a biological tissue, like an automated biological tissue segmentation (typically brain tissue segmentation), or for any biological tissue characterization process that requires pre-contrast T1w images. Advantageously, the method and system according to the invention do not increase the acquisition time since the processing of brain tissues in exams is realized from post-contrast image acquisition only and does not require a pre-contrast image acquisition for this purpose, keeping therefore the acquisition time as short as possible.

More specifically, the present invention concerns a method for an automated biological tissue characterization process, like an automated biological tissue segmentation, of a biological object to be imaged by MRI, the method comprising:

- receiving with a first interface post-contrast MRI data or images, e.g. post-contrast T1w images, for the biological object;
- applying a function trained by a training system to the received post-contrast MRI data in order to output a synthetic pre-contrast image from said post-contrast MRI data (e.g. a pre-contrast T1w image from the post-contrast T1w image), wherein the training system is preferentially based on a generative adversarial network (hereafter GAN);
- automatically applying a characterization process (e.g. applying an automated segmentation process) to the biological tissues of said biological object from the synthetic pre-contrast image.

The present invention concerns also a computer-implemented method for providing a trained function, the method comprising:

- receiving via a first interface an input dataset, wherein the input dataset comprises post-contrast MRI images of a biological object;
- receiving via a second interface another input dataset, wherein said another input dataset comprises pre-contrast MRI images of said biological object, wherein each pre-contrast MRI image is preferentially paired with one of said post-contrast MRI image, i.e. they represent or show a same part of the biological object, said pre-and/or post-contrast images being for instance T1w images;
- training a function based on the input dataset and said another input dataset with a training computation unit, wherein the training computation unit is configured for using a machine learning algorithm, preferentially based on a GAN, i.e. preferentially based on a generative adversarial algorithm, for training said function. The GAN comprises for instance a generative neural network for generating synthetic pre-contrast images from said post-contrast MRI images and a discriminative neural network for evaluating the generated synthetic pre-contrast images. The training aims to increase an error rate of the discriminative neural network in determining whether a pre-contrast MRI image has been generated by the generative neural network or was part of the received another input dataset (i.e. it aims to determine whether synthetized pre-contrast images are realistic enough for being evaluated by the discriminative neural network as belonging to said another input dataset). Preferentially, the training computation unit uses a cycle generative adversarial network, also called "cycleGAN";
- providing the trained function with a third interface.

The present invention concerns also a training system comprising:

- a first interface configured for receiving an input dataset, wherein the input dataset comprises post-contrast MRI images of the biological object;
- a second interface configured for receiving another input dataset, wherein said another input dataset comprises pre-contrast MRI images of a biological object, wherein each post-contrast MRI image is preferentially paired to one of said pre-contrast images, wherein pairing refers to the fact that they represent or show a same part of the biological object. Depending on the technique used, pairing is not mandatory;
- a training computation unit configured for training a function based on said input dataset and said another input dataset, wherein the training uses a machine learning algorithm configured for generating synthetic pre-contrast image from post contrast images, e.g. a GAN algorithm, preferentially a cycleGAN algorithm;
- a third interface for providing the trained function.

Finally, the present invention concerns also a system for an automated characterization of biological object tissues, said system comprising:

- a connection to an imaging system, like the imaging system of an MRI apparatus, configured for acquiring post-contrast MRI data for a biological object;
- a memory for storing each of the acquired post-contrast MRI data;
- a control unit comprising a processor, the control unit being configured for automatically characterizing biological object tissues from images of said biological object. By characterizing, it has to be understood a process that enables the control unit to determine a type of tissue, a property of a tissue, that may differentiate one tissue from another one, etc. Such process encompasses notably the tissue segmentation (e.g. for brain morphometry), and/or the detection and segmentation of biological object abnormalities (e.g., multiple sclerosis lesions, tumors, metastasis, among others);
- optionally a display for displaying the obtained biological tissue characterization of the biological object;

characterized in that the control unit is configured for applying a function trained by a machine learning algorithm, e.g. a GAN algorithm, to the post-contrast MRI data in order to output a synthetic pre-contrast image from said post-contrast MRI data, wherein the control unit is configured for automatically characterizing (e.g. segmenting) the biological tissues of said biological object from the obtained synthetic pre-contrast image. Preferentially, said pre-contrast image and/or said post-contrast image are T1w images, e.g. pre-Gd T1w image generated from post-Gd T1w image. Alternately, the control unit may use the synthetic pre-contrast image for automatically performing image quality assessment for the imaged biological object.

In particular, the present invention proposes thus to use machine learning, more precisely deep learning generative models, and preferentially a cycleGAN, for the synthesis of pre-contrast T1w images from post-contrast T1w images to achieve a biological object tissue characterization free of an acquisition of said pre-contrast T1w images. For instance, the present invention enables to perform a whole-brain segmentation from synthetic pre-Gd T1w images generated from post-Gd data.

The foregoing has broadly outlined the features and technical advantages of the present disclosure so that those skilled in the art may better understand the detailed description that follows. In particular, the present invention enables an accurate post-processing of synthetic pre-contrast T1w images after an acquisition of post-contrast images of said biological object, which until now was not possible without the acquisition of said pre-contrast T1w images.

Additional features and advantages of the disclosure will be described hereinafter that form the object of the claims. Those skilled in the art will appreciate that they may readily use the concept and the specific embodiment disclosed as a basis for modifying or designing other structures for carrying out the same purposes of the present disclosure. Those skilled in the art will also realize that such equivalent constructions do not depart from the spirit and scope of the disclosure as defined by the claims.

For a more complete understanding of the present disclosure, and the advantages thereof, reference is now made to the following descriptions taken in conjunction with the accompanying drawings, wherein like numbers designate like objects, and in which:

Figure 1 illustrates a flowchart of a method for an automated characterization of tissues of a biological object according to the invention;

Figure 2 illustrates a system for implementing the claimed method;

Figure 3 illustrates a comparison between biological object images obtained according to the present invention and obtained according to prior art techniques;

Figure 4 shows examples of automated segmentations obtained according to the claimed method.

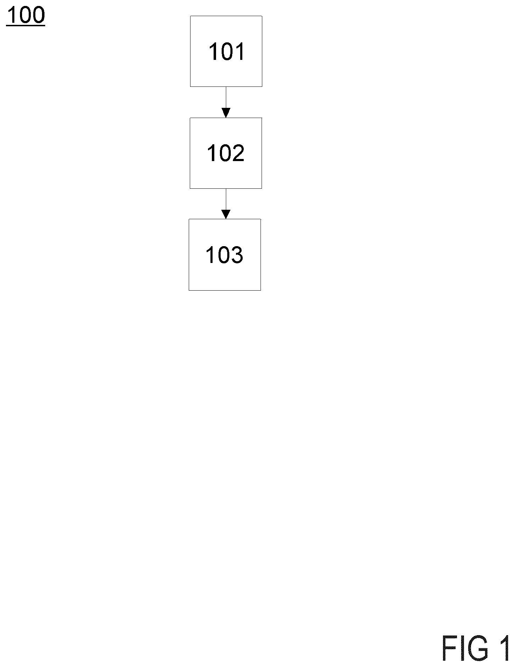

Figures 1 to 4, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

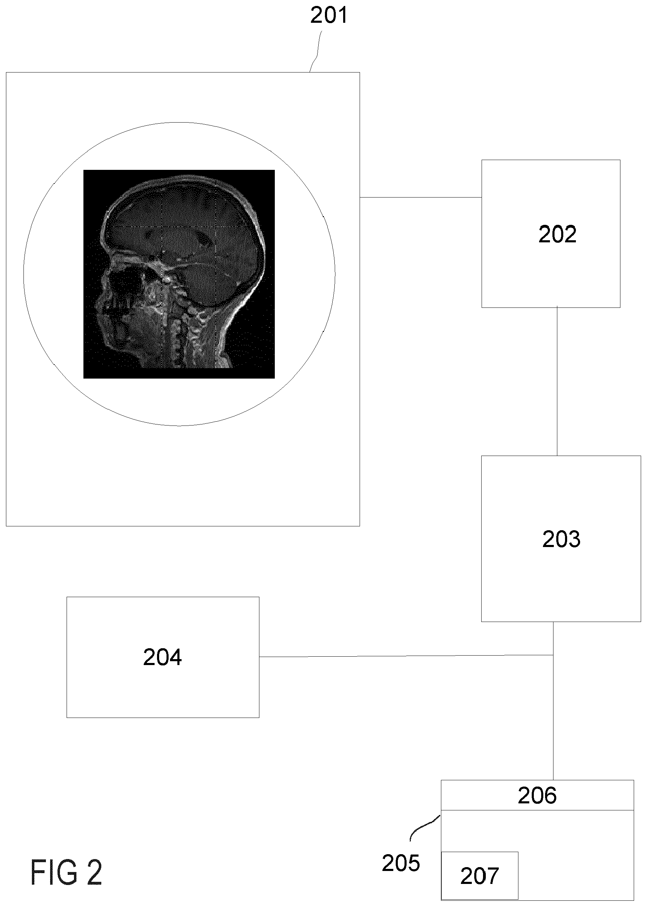

We will now describe in more details the method according to the invention through Figure 1 and Figure 2, wherein Figure 1 describes the different steps of the method 100 carried out by a preferred embodiment of the system according to the invention which is illustrated by Figure 2.

At step 101, a control unit 203 of the system for automated characterization (e.g. automated segmentation and/or abnormality detection) of biological tissues according to the invention acquires or receives, for instance via a first interface 202 configured for enabling an exchange of data between an imaging system, e.g. the imaging system 201 of a MRI apparatus, and said control unit 203, post-contrast MRI data, e.g. post-contrast images, for a biological object to be imaged. The post-contrast data or images are data or images acquired after administration of a contrast agent to the biological object. Said control unit 203 may comprise one or several processors configured for processing MRI data. The control unit 203 might be part of the MRI apparatus or might be a separated independent device.

At step 102, the control unit 203 applies a trained function to the acquired or received post-contrast MRI data in order to output a synthetic pre-contrast image from the post-contrast MRI data, e.g. a synthetic pre-contrast T1w image. The synthetic pre-contrast image is an image representing the biological object as it would be obtained when acquiring said image before or without the administration of the contrast agent.

Preferentially, a training system 205 has been used for training said function. The training system 205 comprises notably a first interface 206, a training computation unit 207, a second and a third interface which can be the same or different from the first interface 206. The training system 205 is notably configured for acquiring or receiving via its first interface 206 an input dataset and another input dataset. In particular, the input dataset and said another input dataset are paired, i.e. to each data of the input dataset corresponds a data of said another input dataset which is closely related or linked to the data of the input dataset. In the present case, the input dataset typically comprises post-contrast MRI data or images of the biological object and said another input dataset comprises pre-contrast T1w data or images of said biological object, wherein each image or data of the input dataset is preferentially paired to an image or data of said another input dataset in that they have been acquired for a same voxel or set of voxels, e.g. they represent a same part of the biological object. The datasets are used by the training computation unit 207 for training the function. At the end of the training, the trained function is able to generate realistic and accurate synthetic pre-contrast T1w images from acquired post-contrast MRI data, e.g. from the input dataset and consequently from any other post-contrast MRI data or image. The trained function might be outputted via the third interface.

At step 103, the system according to the invention automatically performs an automated process (e.g., segmentation) for characterizing the biological tissues of said biological object from the synthetic pre-contrast T1w image and may display the obtained results of the characterization on a display 204. For said automated process for characterizing the biological tissues, technique known in the art might be used.

According to the present invention, the training computation unit 207 uses a machine learning technique for training said function, notably based on a training of deep convolutional networks. Preferably, a generative adversarial algorithm is used by said training computation unit 207, like a GAN, a cycleGAN, or a conditional GAN (hereafter cGAN) algorithm for generating synthetic pre-contrast T1w images of the biological object.

A preferred embodiment illustrating the use of the cycleGAN is described hereafter. Given training datasets from two different domains, the cycleGAN learn to translate images from one domain to the other (domain is denoted as a set of images sharing features that are inherent in the images of the set). In the present case, a first image domain x comprises post-contrast MRI images from said input dataset and a second image domain y comprises pre-contrast T1w images from said another input dataset. The cycleGAN architecture involves then a pair of generators ($G_x$, $G_y$) that are simultaneously trained to obtain synthetic images $G_x(y)$ similar to images of the first image domain x for $G_x$ and $G_y(x)$ similar to images of the second image domain y for $G_y$. The synthetic images $G_x(y)$ and $G_y(x)$ are then fed to a pair of corresponding discriminators ($D_x$, $D_y$), which try to discern between fake and real images. For instance, $G_x(y)$ outputs from an input image y an output image X in the x domain. Then this output image X is used as input for the generator $G_y$, wherein $G_y(X)$ outputs an image Y in the y domain, wherein Y is similar to the original image y. The discriminator compares then y to Y. The same applies mutatis mutandis to $G_y(x)$ to compare an original input image x to an output image X. Preferentially, the architecture of the generators follows the conventional shape of a U-Net with skip connections as described by Ronneberger et al. in the paper entitled "U-Net: Convolutional Networks for Biomedical Image Segmentation" [8]: an encoder is configured for extracting a latent representation (i.e. some information, features that are shared by the input images) of an input image and a decoder is configured for constructing an output image from the extracted latent representation. Said output image is for instance the synthetic pre-contrast T1w image. The discriminators consist of a convolutional neural network that returns the probability of the input image of being sampled from the original image domain. The discriminator receives for instance a pre-contrast T1w image and determines whether the latter is a fake or was truly part of said another input dataset. Generators and discriminators are trained simultaneously including preferentially a cycle-consistency loss between the target (i.e. original input image) and the synthetic image in the adversarial loss function $J_{cycleGAN}$:

$$J_{cycleGAN}(G_x, D_x, G_y, D_y) = arg \min_{G_x} \max_{D_x} \min_{G_y} \max_{D_y} E_{x,y}\{log[D_y(x,y)]\} +$$
$$E_x\{log[1 - D_y(x, G_y(x))]\} + E_{x,y}\{log[D_x(x,y)]\} + E_y\{log[1 - D_x(y, G_x(y))]\} +$$
$$\lambda_x E_x\{|x - G_x(G_y(x))|\} + \lambda_y E_y\{|y - G_y(G_x(y))|\} \quad (Eq. \ 1),$$

with $\lambda_x$ and $\lambda_y$ being weighting terms of the cycle-consistency losses, and $E_i\{j\}$ indicating that the expected value of j depends on the distribution of i (e.g. of x and y when i = x, y) .

Of course, another loss function might be used (e.g. a Wasserstein function) or any other metric that describes the degree of similarity between the original and fake (synthetic) images. Similarly, other architecture than the U-net architecture might be used for the generator: e.g. a ResNet or any other deep learning architecture able to achieve image-to-image translation.

After completing the training, the generator that learned the mapping transformation from post-contrast MRI image domain to pre-contrast T1w image domain can be used to retrieve pre-contrast T1w images from post-contrast MRI images, allowing the use of a conventional tool for the characterization, e.g. segmentation, of brain tissues from the synthetic pre-contrast T1w images.

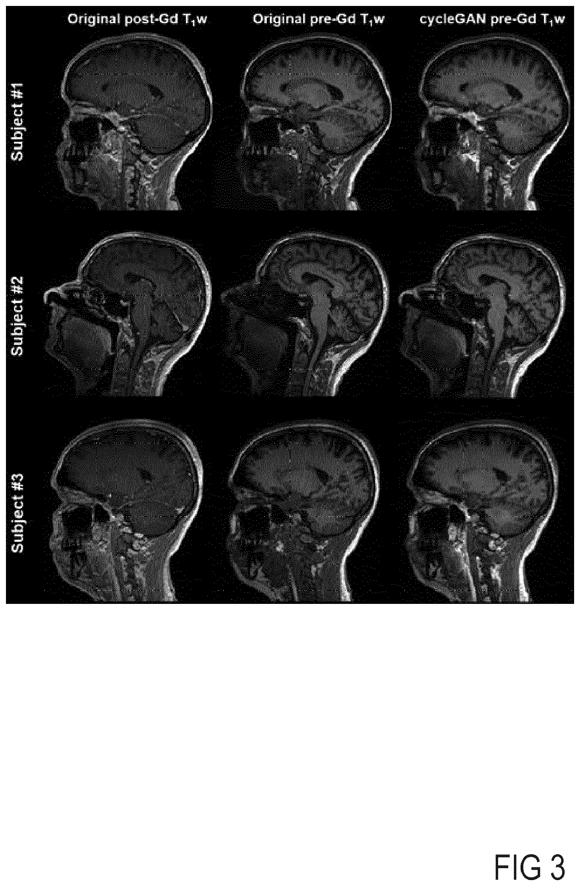

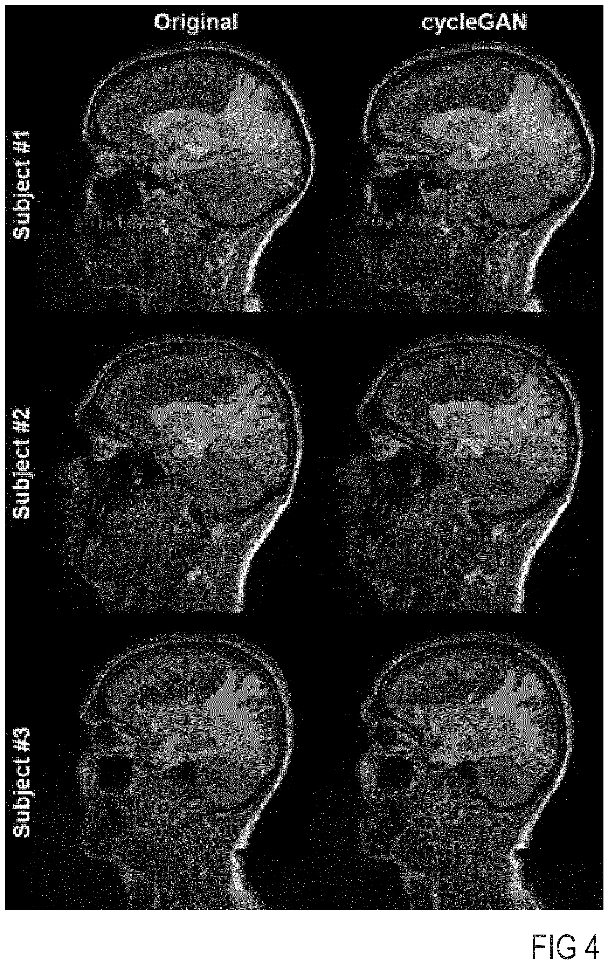

Figures 3 and 4 show concrete applications of the method according to the invention with respect to a brain as biological object and gadolinium (Gd) as contrast agent for MRI imaging. In Figure 3, original pre-Gd and post-Gd T1w images in three example subjects are shown together with synthetic pre-Gd images generated from a cycleGAN according to the present invention. In order to train the generative adversarial algorithm, whole-brain T1w images pre- and post-Gd enhancement were collected from 42 patients with multiple sclerosis scanned at 3T. A cycleGAN was trained to learn the mapping transformation from post-Gd T1w images to pre-Gd images over 100 epochs (Adam optimizer, learning rate of 0.0002, $\beta_1$=0.5, $\beta_2$=0.999, $\lambda_x$ = $\lambda_y$ = 100) using sagittal slices from 32 randomly selected patients after performing an affine registration of pre-Gd images onto post-Gd images. After training, synthetic pre-Gd T1w images were computed in the remaining ten test patients. The Siemens Healthcare MorphoBox prototype software was employed to automatically segment brain regions from the original pre-Gd T1w and the synthetic pre-Gd T1w images. According to the present invention, the synthetic T1w pre-Gd images retained comparable contrast between gray and white matter to the original images (see Figure 3). Additionally, Figure 4 shows that estimated regional volumes from synthetic images are very similar to those derived from original T1w images (see Figure 4). Good correlation (r>0.99, p<0.001) and an average bias of -0.04 ml (limits of agreement at 95% of confidence: [-6.2; 6.2] ml) was observed between volumes computed in original and cycleGAN-generated images.

Alternatively, the proposed cycleGAN could be replaced by any generative model able to reliably synthetized pre-contrast image intensities from post-contrast data. One representative example, which is not based on deep learning architectures, is Replica, a supervised random forest algorithm that learns a nonlinear regression between multiresolution image patches of a target and input domain. However, although proved to be effective in the synthesis of T2w and FLAIR images form T1w, the method suffers from the blurring of small anatomical details due to the average of predictions from the different random forest tree, which in turn may affect morphometry performances.

Compared to existing solutions, the present invention makes it possible to use existing reliable and validated tools for brain image processing in prospective studies where pre-contrast T1w images were not acquired or in current studies where pre-contrast T1w images are not acquired to keep short the exam duration. Given the availability of the proper datasets required for the training of the mapping transformation, the here described method can be also easily applied to different pairs of images and/or adapted to consider more than one single input and/or target image domain. In addition, the generation of the synthetic contrast, i.e. synthetic image, is computationally cheap. Compared to the work of Ceccaldi et al. [6] proposing a network to achieve brain tissue segmentation independently from the employed protocol used, the present invention focus notably on a deep learning network to synthetize the missing pre-Gd T1w contrast in order to subsequently use more established and validated tools when pre-contrast T1w images are missing.

To summarize, the present invention proposes to use a deep learning-based generative model that reliably estimates pre-contrast image intensities from post-contrast data together with a tool for characterizing tissues of said biological object from the obtained synthetic pre-contrast images of the biological object. For example, the present invention allows notably an accurate automated segmentation of brain tissues, otherwise not obtainable in studies without a pre-contrast T1w acquisition.

List of citations:

[1] Wattjes MP, Rovira À, Tintore M, et al. Evidence-based guidelines: MAGNIMS consensus guidelines on the use of MRI in multiple sclerosis-clinical implementation in the diagnostic process. Nat Rev Neurol. 2015;11(8):471-482.

[2] Ashburner J. Computational anatomy with the SPM software. Magn Reson Imaging. 2009;27(8):1163-1174.

[3] Fischl B. FreeSurfer. Neuroimage. 2012;62(2):774-781.

[4] Schmitter D, Roche A, Marechal B, et al. An evaluation of volume-based morphometry for prediction of mild cognitive impairment and Alzheimer's disease.NeuroImage Clin. 2015;7:7-17.

[5] Hannoun S, Baalbaki M, Haddad R, et al. Gadolinium effect on thalamus and whole brain tissue segmentation. Neuroradiology. 2018;60(11):1167-1173.

[6] Ceccaldi et al., PROTOCOL INDEPENDENT IMAGE PROCESSING WITH ADVERSARIAL NETWORKS, Pub. No.: US 2019 / 0046068 A1. 2019.

[7] Liu, J., Gong, E., Christen, T., Zaharchuk, G., Contrast-free MRI Contrast Enhancement with Deep Attention Generative Adversarial Network, ISMRM 2019.

[8] Ronneberger O, Fischer P, Brox T. U-net: Convolutional networks for biomedical image segmentation. In: Lecture Notes in Computer Science. Vol 9351. ; 2015:234-241.

**Claims**

1. A method (100) for automated characterization of tissues of a biological object to be imaged using contrast agent enhanced MRI, the method comprising:

   - acquiring (101) post-contrast MRI data for the biological object;
   - applying (102) a function trained by a training system (205) to the received post-contrast MRI data in order to output a synthetic pre-contrast image from said post-contrast MRI data;

- automatically characterizing the (103) biological tissues of said biological object from the synthetic pre-contrast image.

2. The method of claim 1, wherein the post-contrast MRI data are post-contrast T1-weighted images and the synthetic pre-contrast image is a synthetic pre-contrast T1-weighted image.

3. The method of claim 1 or 2, wherein the contrast agent is gadolinium.

4. The method according to one of the claims 1 to 3, wherein a generative adversarial network is used for training said function.

5. The method according to claim 4, wherein the generative adversarial network is a cycle generative adversarial network - hereafter cycleGAN.

6. Method according to one of the claims 1 to 5, wherein automatically characterizing the biological tissues comprises automatically segmenting said biological tissues.

7. Computer-implemented method for providing a trained function, the method comprising:

   - receiving via a first interface an input dataset, wherein the input dataset comprises post-contrast MRI images of a biological object;
   - receiving via a second interface another input dataset, wherein said another input dataset comprises pre-contrast MRI images of said biological object;
   - training a function based on the input dataset and said another input dataset with a training computation unit (207), wherein the training computation unit (207) is configured for using a machine learning algorithm for training said function;
   - providing the trained function with a third interface.

8. Computer-implemented method according to claim 7, wherein each pre-contrast MRI image is paired with one of said post-contrast MRI image.

9. Computer-implemented method according to claim 7 or 8, wherein the machine learning algorithm is a generative adversarial algorithm, preferentially a cycleGAN algorithm.

10. Computer-implemented method according to one of the claims 7 to 9, wherein the post-contrast and pre-contrast images are T1-weighted MRI images.

11. Training system (205) comprising:

    - a first interface (206) configured for receiving an input dataset, wherein the input dataset comprises post-contrast MRI images of the biological object;
    - a second interface configured for receiving another input dataset, wherein said another input dataset comprises pre-contrast MRI images of a biological object;
    - a training computation unit (203) configured for training a function based on said input dataset and said another input dataset, wherein the training uses a machine learning algorithm configured for generating synthetic pre-contrast image from post contrast images;
    - a third interface for providing the trained function.

12. System for automated characterization of biological object tissues from MRI data acquired using a contrast agent, the system comprising:

    - a connection to an imaging system (201) of an MRI apparatus, said connection being configured for acquiring post-contrast MRI data for a biological object;
    - a memory for storing each of the acquired post-contrast MRI data;
    - a control unit (203) comprising a processor, the control unit (203) being configured for automatically characterizing biological object tissues from images of said biological object;

    the system (200) being **characterized in that** the control unit (203) is configured for applying a function trained by a machine learning algorithm to the post-contrast MRI data in order to output a synthetic pre-contrast image from said post-contrast MRI data, wherein the control unit (203) is configured for automatically characterizing the biological tissues of said biological object from the obtained synthetic pre-contrast image.

13. System according to claim 12, wherein the control unit (203) is configured for automatically segmenting the biological tissues.

14. System according to claim 12 or 13, wherein the machine learning algorithm is a cycleGAN algorithm.

EP 3 872 754 A1

100

FIG 1

9

FIG 2

FIG 3

FIG 4

Europäisches
Patentamt
European
Patent Office
Office européen
des brevets

# EUROPEAN SEARCH REPORT

**Application Number**

EP 20 16 0012

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/259153 A1 (ZHANG YUE [US] ET AL) 22 August 2019 (2019-08-22) * abstract * * paragraphs [0005], [0028], [0031], [0039] * | 1-14 | INV. G06T7/00 G06T7/11 G06T11/00 |
| A | US 2019/108634 A1 (ZAHARCHUK GREG [US] ET AL) 11 April 2019 (2019-04-11) * abstract * | 1-14 | |
| A | CN 110 827 232 A (UNIV SICHUAN) 21 February 2020 (2020-02-21) * abstract * | 1-14 | |
| A | WU KUN ET AL: "Image synthesis in contrast MRI based on super resolution reconstruction with multi-refinement cycle-consistent generative adversarial networks", JOURNAL OF INTELLIGENT MANUFACTURING, CHAPMAN AND HALL, LONDON, GB, vol. 31, no. 5, 1 November 2019 (2019-11-01), pages 1215-1228, XP037140954, ISSN: 0956-5515, DOI: 10.1007/S10845-019-01507-7 [retrieved on 2019-11-01] * abstract * | 1-14 | TECHNICAL FIELDS SEARCHED (IPC) G06T G06N |
| A | SAHIN OLUT ET AL: "Generative Adversarial Training for MRA Image Synthesis Using Multi-Contrast MRI", ARXIV.ORG, CORNELL UNIVERSITY LIBRARY, 201 OLIN LIBRARY CORNELL UNIVERSITY ITHACA, NY 14853, 12 April 2018 (2018-04-12), XP080870088, * abstract * | 1-14 | |

-/--

The present search report has been drawn up for all claims

| Place of search | Date of completion of the search | Examiner |
|---|---|---|
| Munich | 8 July 2020 | Rimassa, Simone |

EPO FORM 1503 03.82 (P04C01)

page 1 of 2

Europäisches
Patentamt

European
Patent Office

Office européen
des brevets

# EUROPEAN SEARCH REPORT

Application Number

EP 20 16 0012

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DAR SALMAN UH ET AL: "Image Synthesis in Multi-Contrast MRI With Conditional Generative Adversarial Networks", IEEE TRANSACTIONS ON MEDICAL IMAGING, IEEE SERVICE CENTER, PISCATAWAY, NJ, US, vol. 38, no. 10, 1 October 2019 (2019-10-01), pages 2375-2388, XP011748194, ISSN: 0278-0062, DOI: 10.1109/TMI.2019.2901750 [retrieved on 2019-10-01] * abstract * ----- | 1-14 | |

TECHNICAL FIELDS
SEARCHED       (IPC)

The present search report has been drawn up for all claims

| Place of search | Date of completion of the search | Examiner |
|---|---|---|
| Munich | 8 July 2020 | Rimassa, Simone |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 16 0012

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2020

| Patent document cited in search report | | Publication date | Patent family member(s) | | Publication date |
|---|---|---|---|---|---|
| US 2019259153 | A1 | 22-08-2019 | NONE | | |
| US 2019108634 | A1 | 11-04-2019 | AU | 2018346938 A1 | 23-04-2020 |
| | | | CA | 3078728 A1 | 18-04-2019 |
| | | | KR | 20200063222 A | 04-06-2020 |
| | | | US | 2019108634 A1 | 11-04-2019 |
| | | | WO | 2019074938 A1 | 18-04-2019 |
| CN 110827232 | A | 21-02-2020 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20190046068 A1

### Non-patent literature cited in the description

- **WATTJES MP ; ROVIRA À ; TINTORE M et al.** Evidence-based guidelines: MAGNIMS consensus guidelines on the use of MRI in multiple sclerosis-clinical implementation in the diagnostic process. *Nat Rev Neurol.,* 2015, vol. 11 (8), 471-482
- **ASHBURNER J.** Computational anatomy with the SPM software. *Magn Reson Imaging,* 2009, vol. 27 (8), 1163-1174
- **FISCHL B.** FreeSurfer. *Neuroimage,* 2012, vol. 62 (2), 774-781
- **SCHMITTER D ; ROCHE A ; MARECHAL B et al.** An evaluation of volume-based morphometry for prediction of mild cognitive impairment and Alzheimer's disease. *NeuroImage Clin.,* 2015, vol. 7, 7-17
- **HANNOUN S ; BAALBAKI M ; HADDAD R et al.** Gadolinium effect on thalamus and whole brain tissue segmentation. *Neuroradiology,* 2018, vol. 60 (11), 1167-1173
- **LIU, J. ; GONG, E. ; CHRISTEN, T. ; ZAHARCHUK, G.** Contrast-free MRI Contrast Enhancement with Deep Attention Generative Adversarial Network. *ISMRM,* 2019
- **RONNEBERGER O ; FISCHER P ; BROX T.** U-net: Convolutional networks for biomedical image segmentation. *Lecture Notes in Computer Science,* 2015, vol. 9351, 234-241